Europäisches Patentamt

(19) European Patent Office

Office européen des brevets

(11) Numéro de publication: **0 028 948**

**A1**

# (12) DEMANDE DE BREVET EUROPEEN

(21) Numéro de dépôt: **80401434.8**

(22) Date de dépôt: **08.10.80**

(51) Int. Cl.³: **B 01 F 5/06**
**A 01 J 11/16**

(30) Priorité: **13.11.79 FR 7927900**

(43) Date de publication de la demande:
**20.05.81 Bulletin 81/20**

(84) Etats Contractants Désignés:
**DE GB IT NL**

(71) Demandeur: **FIVES-CAIL BABCOCK, Société anonyme**
**7, rue Montalivet**
**F-75383 Paris Cedex 08(FR)**

(71) Demandeur: **PIERRE GUERIN SA. Société Anonyme**
**B.P. 12**
**F-79210 Mauze sur le Mignon(FR)**

(72) Inventeur: **Bordas, André**
**13bis, rue Gambetta**
**F-92260 Fontenay aux Roses(FR)**

(74) Mandataire: **Fontanié, Etienne**
**FIVES-CAIL BABCOCK 7, rue Montalivet**
**F-75383 Paris Cedex 08(FR)**

(54) Dispositif d'homogénéisation pour produits liquides ou pâteux.

(57) Dispositif d'homogénéisation pour produits liquides ou pâteux, comprenant une enveloppe dont la surface cylindrique interne est filetée, sur une partie au moins de sa longueur, un orifice d'alimentation en produits qui est pratiqué à travers la paroi de ladite enveloppe, un obturateur en forme de bouchon cylindrique fileté qui est vissé dans ladite enveloppe, ledit obturateur présentant des rainures longitudinales qui définissent avec le filetage de l'enveloppe, des passages d'homogénéisation pour les produits, et une tubulure de sortie desdits produits homogénéisés.

Pour assurer le réglage en marche, les filetages (22, 23) de l'enveloppe (1) et de l'obturateur (2) sont conformés de telle sorte que la section des passages d'homogénéisation puisse être modifiée par rotation dudit obturateur, ladite rotation étant rendue possible du fait que l'orifice d'alimentation (9) débouche dans un espace annulaire (10) entourant ledit obturateur, sensiblement au milieu de la longueur des passages d'homogénéisation, de telle sorte que les produits introduits sous pression dans le dispositif par l'orifice d'alimentation (9) se répartissent en deux courants de même débit qui s'écoulent suivant deux directions opposées le long desdits passages d'homogénéisation.

-FIG 1-

## Dispositif d'homogénéisation pour produits liquides ou pâteux

La présente invention concerne l'homogénéisation de produits liquides ou pâteux, dans des domaines divers tels que les industries alimentaires, cosmétiques et pharmaceutiques.

On connaît déjà un dispositif d'homogénéisation comprenant une enveloppe cylindrique dont la surface interne est filetée, sur une partie au moins de sa longueur, un orifice d'alimentation en produits qui est pratiqué à travers la paroi cylindrique de ladite enveloppe, un obturateur en forme de bouchon cylindrique fileté qui est vissé dans ladite enveloppe, ledit obturateur présentant des rainures longitudinales qui définissent, avec le filetage de l'enveloppe, des passages d'homogénéisation pour les produits, et une tubulure de sortie desdits produits homogénéisés.

Suivant le dispositif connu, les produits introduits dans l'enveloppe par l'orifice d'alimentation sont forcés à travers les passages précités sous l'action d'un piston déplaçable longitudinalement à l'intérieur de l'enveloppe, en amont de l'obturateur.

Suivant une variante de réalisation, les produits sont introduits sous pression dans l'enveloppe par l'orifice d'alimentation. Le piston déplaçable longitudinalement à l'intérieur de l'enveloppe est alors supprimé, et le dispositif constitue un bloc d'homogénéisation adaptable sur tout bloc cylindre d'alimentation à plusieurs pistons, par exemple. Il va de soi que le dispositif peut être alimenté sous pression par tout autre moyen approprié.

Quelle que soit la forme de réalisation adoptée, le dispositif connu présente un certain nombre d'inconvénients.

Pour adapter ce dispositif au traitement de produits donnés, il est indispensable de pouvoir faire varier, à débit constant, la pression de travail. On est conduit, à cet effet, à modifier les dimensions des passages d'homogénéisation, ce qui pose un certain nombre de problèmes.

La solution utilisée jusqu'ici consiste à faire appel à un jeu d'obturateurs à passages différemment calibrés, et à mettre en place pour chaque cas particulier, l'obturateur convenablement approprié. Il va de soi que le remplacement d'un obturateur par un autre nécessite le démontage du dispositif. Si une telle solution est à la rigueur acceptable lorsqu'il s'agit de passer du traitement d'un produit à celui d'un autre produit, elle ne saurait convenir lorsque l'on désire modifier les conditions de travail au cours du traitement d'un même produit. Le traitement en cours doit alors être interrompu, ce qui entraîne de sérieuses perturbations.

L'invention a surtout pour but d'éviter les inconvénients susmentionnés.

Elle consiste essentiellement à réaliser, dans un dispositif avantageusement exécuté sous la forme d'un bloc d'homogénéisation, un agencement permettant pratiquement d'assurer l'équilibrage de l'obturateur.

Elle consiste en outre, à réaliser un dispositif à obturateur réglable suivant lequel la variation de section des passages d'homogénéisation est obtenue par rotation de l'obturateur sous l'action d'une commande extérieure.

Le dispositif à obturateur équilibré réglable suivant l'invention permet, non seulement d'éviter les démontages inhérents à l'état de l'art antérieur, mais encore d'autoriser le réglage en marche, rendu possible par l'équilibrage de l'obturateur.

L'invention a plus précisément pour objet un dispositif d'homogénéisation pour produits liquides ou pâteux, comprenant une enveloppe dont la paroi présente une surface interne cylindrique qui est filetée, sur une partie au moins de sa longueur, un orifice d'alimentation en produits qui est pratiqué à travers la paroi de ladite enveloppe, un obturateur en forme de bouchon cylindrique fileté qui est vissé dans ladite enveloppe, ledit obturateur présentant des rainures longitudinales qui définissent, avec le filetage de l'enveloppe, des passages d'homogénéisation pour les produits, et une tubulure de sortie desdits produits homogénéisés, caractérisé en ce que les filetages de l'enveloppe et de l'obturateur sont conformés pour permettre le réglage du dispositif par rotation de l'obturateur, et en ce que l'orifice d'alimentation débouche dans un espace annulaire entourant ledit obturateur, sensiblement au milieu de la longueur des passages d'homogénéisation, de telle sorte que les produits introduits sous pression dans le dispositif par l'orifice d'alimentation se répartissent en deux courants de même débit qui s'écoulent suivant deux directions opposées le long desdits passages d'homogénéisation.

L'espace annulaire est défini par une rainure circulaire pratiquée dans la paroi de l'enveloppe, et par la partie de la surface cylindrique de l'obturateur située en regard de ladite rainure.

L'obturateur est solidaire d'une tête en partie extérieure à l'enveloppe qu'elle ferme à l'une de ses extrémités, ledit obturateur et ladite tête étant reliés par un élément intermédiaire dont la section est inférieure à celle qui est délimitée par la surface cylindrique interne de l'enveloppe, de manière à définir avec cette dernière une chambre de section annulaire.

Suivant une première forme de l'invention, la tubulure de sortie est disposée sur le côté de l'enveloppe, ladite tubulure communiquant, d'une part avec la chambre de section annulaire, d'autre part, avec une chambre cylindrique définie, à l'autre extrémité de l'enveloppe, par l'obturateur et ladite autre extrémité qui est fermée.

La tubulure de sortie communique avec lesdites chambres par l'intermédiaire d'un collecteur sur lequel elle est branchée, ledit collecteur étant rapporté sur l'enveloppe avantageusement réalisée sous la forme d'un parallélépipède rectangle. Deux canaux établissent la communication entre la tubulure de sortie et les chambres précitées, chacun desdits canaux étant pratiqué à travers la paroi de l'enveloppe et celle du collecteur.

Suivant une deuxième forme de l'invention, la tubulure de sortie est disposée coaxialement à l'enveloppe, dans le prolongement et à l'autre extrémité de celle-ci, ladite tubulure communiquant avec la chambre de section annulaire par un canal pratiqué axialement à travers l'obturateur et l'élément intermédiaire le reliant à sa tête, et par des orifices pratiqués radialement à travers la paroi dudit élément intermédiaire. D'une manière avantageuse, l'enveloppe est également réalisée sous la forme d'un parallélépipède rectangle.

Quelle que soit la forme de réalisation adoptée, les rainures longitudinales de l'obturateur s'étendent sur une distance angulaire au plus égale à 90°.

Les filetages de la surface interne de l'enveloppe sont tronqués de façon progressivement variable suivant le contour d'une section transversale, par un alésage de l'enveloppe effectué suivant un axe décalé par rapport à l'axe géométrique de ladite enveloppe, de telle sorte que la section des passages pour les produits à homogénéiser puisse être réglée en marche par rotation de la tête de l'obturateur.

L'invention sera mieux comprise en se référant à la description qui suit, faite en regard des dessins annexés, concernant deux formes particulières de réalisation données à titre d'exemples non limitatifs.

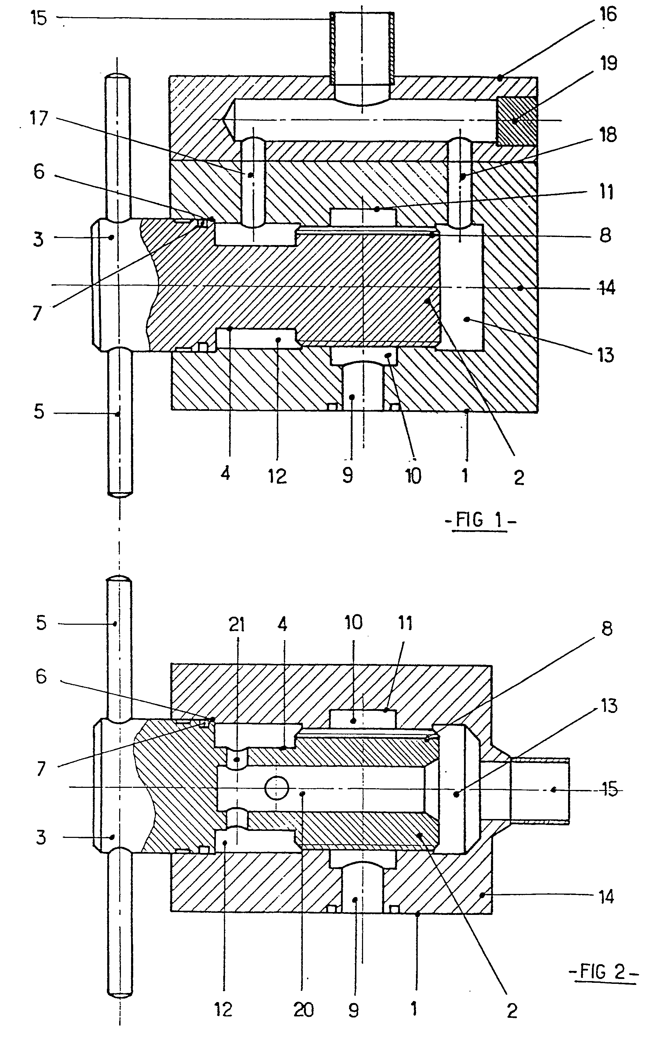

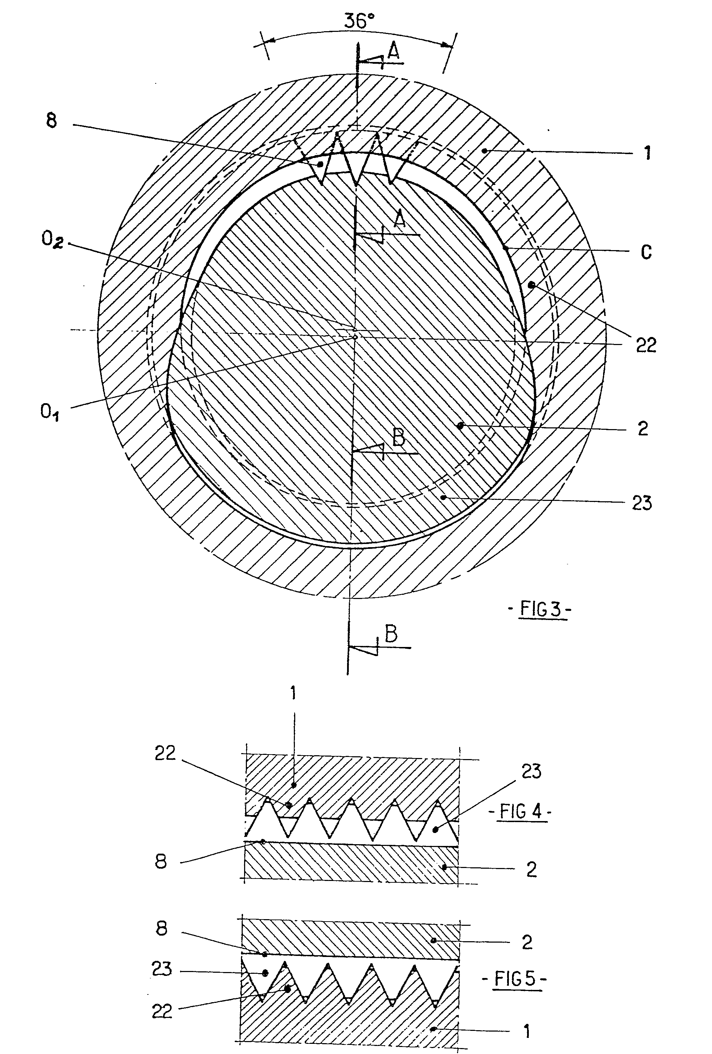

La figure 1 est une vue en coupe axiale du dispositif réalisé suivant une première forme de l'invention ; la figure 2 est une vue en coupe axiale du dispositif réalisé suivant une deuxième forme de l'invention ; la figure 3 est une vue en coupe transversale de l'obturateur et de l'enveloppe, ladite coupe, effectuée dans une zone extérieure à l'espace annulaire, correspondant indifféremment à l'une ou l'autre des deux formes de l'invention ; la figure 4 est une coupe suivant la ligne A-A de la figure 3 ; la figure 5 est une coupe suivant la ligne B-B de la figure 3, ladite coupe étant effectuée après rotation de l'obturateur de 180°.

Sur la figure 1, le repère 1 désigne l'enveloppe du dispositif dont la paroi présente une surface interne cylindrique qui est filetée, sur une partie au moins de sa longueur. Un obturateur 2, en forme de bouchon cylindrique fileté, vient se visser à l'intérieur de l'enveloppe 1. Cet obturateur est solidaire d'une tête 3, de forme cylindrique, en partie extérieure à l'enveloppe 1 qu'elle ferme à l'une de ses extrémités, celle qui est située à gauche de la figure. L'obturateur 2 et sa tête 3 sont reliés par un élément intermédiaire 4, de préférence cylindrique, disposé suivant l'axe géométrique de l'enveloppe 1, et dont la section est inférieure à celle qui est délimitée par la surface cylindrique interne de la paroi de ladite enveloppe. La partie de la tête 3 extérieure à l'enveloppe 1 est traversée suivant une direction diamétrale par une broche 5. Cette broche permet de commander la rotation de la tête 3 et par conséquent, celle de l'obturateur 2. Le déplacement longitudinal dudit obturateur fileté provoqué par sa mise en rotation, est limité vers la droite de la figure, lorsque la tête 3 arrive en butée contre un épaulement interne 6 de l'enveloppe 1. La surface interne de cette dernière présente à cet effet, à son extrémité non filetée située à gauche de la figure, un diamètre sensiblement plus grand que dans la partie filetée qui reçoit l'obturateur 2. Le diamètre de la tête 3 correspond à celui de ladite extrémité. Un joint circulaire 7 assure l'étanchéité entre la tête 3 et l'enveloppe 1.

L'obturateur 2 présente, sur sa périphérie, un certain nombre de rainures longitudinales, telles que 8, dont il sera parlé plus explicitement par la suite, en référence à la description de la figure 3. Ces rainures définissent, avec le filetage interne de l'enveloppe 1, des passages d'homogénéisation pour les produits qui sont introduits sous pression dans l'enveloppe 1 par un orifice d'alimentation 9 qui est pratiqué à travers la paroi de ladite enveloppe. L'orifice d'alimentation 9 débouche dans un espace annulaire 10 entourant l'obturateur 2, sensiblement au milieu de la longueur de ce dernier. L'espace annulaire 10 est défini par une rainure circulaire 11 pratiquée dans la paroi de l'enveloppe 1 suivant une direction transversale de ladite enveloppe, et par la partie médiane de la surface cylindrique filetée de l'obturateur 2 qui est située en regard de la rainure circulaire 6.

Les produits à homogénéiser admis sous pression dans l'espace annulaire 10 se répartissent en deux courants de même débit qui s'écoulent suivant deux directions opposées le long des passages d'homogénéisation précités.

Un premier courant empruntant les passages d'homogénéisation le long de la partie située sur la gauche de l'obturateur 2, atteint une chambre 12 de section annulaire définie par le volume compris entre l'élément 4 et la surface interne de l'enveloppe 1, ledit volume étant latéralement limité par les faces d'extrémité en regard de l'obturateur 2 et de sa tête 3.

Un deuxième courant empruntant les passages d'homogénéisation le long de la partie située sur la droite de l'obturateur 2 atteint une chambre 13 de forme cylindrique définie à l'extrémité droite de l'enveloppe 1 par le volume compris entre un fond 14 fermant ladite enveloppe, et la face d'extrémité de l'obturateur 2 située en regard dudit fond.

Les produits homogénéisés dans les chambres 12 et 13 sont évacués par une tubulure de sortie 15. Cette tubulure, disposée sur le côté de l'enveloppe, communique avec la chambre 12 par l'intermédiaire d'un collecteur 16 sur lequel elle est branchée, et d'un canal 17 pratiqué à travers la paroi de l'enveloppe 1 et celle dudit collecteur. La tubulure 15 communique avec la chambre 13 par l'intermédiaire du collecteur 16 et d'un canal 18 pratiqué à travers la paroi de l'enveloppe 1 et celle dudit collecteur. Les courants de produits en provenance des chambres 12 et 13 se réunissent donc dans le collecteur 16 d'où les produits sont évacués par la tubulure 15. Le collecteur 16 est avantageusement réalisé sous la forme d'une pièce rapportée sur l'enveloppe 1, ladite pièce présentant la forme d'un étui dont l'entrée est obturée par un bouchon 19.

Sur la figure 2 qui représente le dispositif réalisé suivant une autre forme de l'invention, on a conservé les mêmes repères que ceux de la figure 1 pour désigner les éléments identiques ou équivalents. On se limitera dans ce qui suit à décrire les seuls éléments spécifiques de cette forme de réalisation qu'il s'agisse d'éléments particuliers ou différemment disposés.

Suivant cette variante, la tubulure de sortie 15 des produits homogénéisés vient se brancher sur le fond 14 de l'enveloppe 1, coaxialement à ladite enveloppe. La tubulure 15 communique avec la chambre 12 par l'intermédiaire de la chambre 13, d'un canal 20 pratiqué axialement dans le corps de l'obturateur, et d'orifices, tels que 21, pratiqués radialement à travers la paroi de l'élément 4, ce dernier étant réalisé sous la forme d'un cylindre creux dont le diamètre intérieur correspond à celui du canal 20. Le courant de produits homogénéisés reçus dans la chambre 12 est donc dirigé par les orifices 21, l'élément 4 et le canal 20 vers la chambre 13 où il se réunit au courant de produits directement reçu dans cette dernière chambre. La chambre 13 joue le rôle d'un collecteur d'où les produits homogénéisés sont évacués par la tubulure de sortie 15.

Quelle que soit la forme de réalisation du dispositif, il est facile de comprendre que les pressions régnant dans les chambres 12 et 13 sont égales. La valeur de cette pression correspond à celle de la pression d'entrée dans l'espace annulaire 10 diminué de la perte de charge le long des tronçons de passage de longueurs identiques empruntés par les produits de part et d'autre de la zone médiane de l'obturateur 2.

Ce dernier est donc pratiquement équilibré, ce qui autorise sa rotation même lorsque le dispositif est en marche puisque tout risque de coincement entre les filetages coopérants de l'enveloppe 1 et dudit obturateur, qui résulterait d'une importante différence de pression entre les faces d'extrémité de celui-ci, est éliminé. Il suffit alors de faire tourner la broche 5 de la tête 3 pour entraîner en rotation ladite tête, et par conséquent l'élément intermédiaire 4 et l'obturateur 2. Cette possibilité est avantageusement mise à profit pour commander le réglage de l'obturateur 2, c'est-à-dire la variation de section des passages prévus le long de celui-ci, grâce à une disposition particulière que l'on va maintenant décrire.

Les figures 3, 4 et 5 illustrent la disposition permettant d'effectuer le réglage précité. Les rainures longitudinales 8 de l'obturateur 2 s'étendent sur une distance angulaire au plus égale à 90°. Dans le cas de l'exemple représenté sur la figure 3, ces rainures au nombre de trois s'étendent sur une distance angulaire de 36°. Les repères 22 et 23 désignent respectivement les filetages de l'enveloppe 1 et de l'obturateur 2.

Les filetages 22 sont tronqués de façon progressivement variable suivant le contour d'une section transversale par un alésage de l'enveloppe 1 effectué suivant un axe décalé par rapport à l'axe géométrique de ladite enveloppe. Ce décalage est mis en évidence par la distance séparant la trace $O_1$ de l'axe géométrique de l'enveloppe 1 et de l'obturateur 2 sur le plan de coupe, de la trace $O_2$ de l'axe d'alésage de ladite enveloppe sur ledit plan de coupe. Le repère C désigne le cercle d'alésage.

Dans le cas de l'exemple représenté sur la figure 3, les traces $O_1$ et $O_2$ sont alignées sur une droite verticale, la trace $O_2$ étant située au-dessus de la trace $O_1$. Les rainures 8 sont disposées de part et d'autre de ladite droite verticale, à la partie supérieure de la figure, dans la zone où la distance à l'axe de trace $O_2$ est la plus petite et où, par conséquent, la troncature des filetages 22 est la plus forte. La section des passages définis entre les rainures 8 et la partie du filetage 22 à forte troncature, est alors la plus grande, comme cela apparaît nettement sur la figure 4. Par contre, la section des passages définis entre les rainures 8 et la partie du filetage 22 à faible troncature, est la plus petite, dans la zone où la distance à l'axe de trace $O_2$ est la plus grande. Cela apparaît nettement sur la figure 5 qui correspond à une coupe de la figure 3, effectuée à la partie inférieure de celle-ci, après que l'obturateur 2 ait tourné de 180° par rapport à la position qu'il occupe sur ladite figure. Il va de soi qu'entre ces deux positions diamétralement opposées, il est possible, par rotation de l'obturateur 2, de régler la section des passages à toute valeur intermédiaire, et de modifier ainsi, suivant les nécessités d'un traitement, les conditions de travail du dispositif.

Le dispositif décrit peut être alimenté en produit sous pression par tout moyen approprié, pompe par exemple.

D'une façon plus particulièrement avantageuse, il est réalisé sous la forme d'un bloc d'homogénéisation adaptable, de manière amovible, sur un bloc cylindre à plusieurs pistons qui compriment les produits et les refoulent dans un collecteur, l'orifice d'alimentation 9 étant disposé en coïncidence avec l'orifice de sortie dudit collecteur. L'enveloppe 1 est alors préférablement réalisée sous la forme d'un parallélépipède rectangle.

La tête 3 est avantageusement réalisée sous la forme d'un bouton muni de graduations indiquant le degré de réglage.

Bien que l'invention ait été décrite en référence à deux formes particulières de réalisation, il va de soi qu'elle n'y est en rien limitée et que des modifications peuvent lui être apportées sans sortir de son domaine. On pourra notamment remplacer l'un quelconque des moyens décrits par un autre moyen techniquement équivalent. L'invention couvre donc, outre les exemples représentés, leurs différentes variantes d'exécution.

Revendications de brevet

1. Dispositif d'homogénéisation pour produits liquides ou pâteux, comprenant une enveloppe dont la surface cylindrique interne est filetée, sur une partie au moins de sa longueur, un orifice d'alimentation en produits qui est pratiqué à travers la paroi de ladite enveloppe, un obturateur en forme de bouchon cylindrique fileté qui est vissé dans ladite enveloppe, ledit obturateur présentant des rainures longitudinales qui définissent, avec le filetage de l'enveloppe, des passages d'homogénéisation pour les produits, et une tubulure de sortie desdits produits homogénéisés, caractérisé en ce que les filetages (22, 23) de l'enveloppe (1) et de l'obturateur (2) sont conformés pour permettre le réglage du dispositif par rotation de l'obturateur (2), et en ce que l'orifice d'alimentation (9) débouche dans un espace annulaire (10) entourant ledit obturateur, sensiblement au milieu de la longueur des passages d'homogénéisation, de telle sorte que les produits introduits sous pression dans le dispositif par l'orifice d'alimentation (9) se répartissent en deux courants de même débit qui s'écoulent suivant deux directions opposées le long desdits passages d'homogénéisation.

2. Dispositif suivant la revendication 1, caractérisé en ce que l'espace annulaire (10) est défini par une rainure circulaire (11) pratiquée dans la paroi de l'enveloppe (1), et par la partie de la surface cylindrique de l'obturateur (2) en regard de ladite rainure.

3. Dispositif suivant la revendication 1, caractérisé en ce que l'obturateur (2) est solidaire d'une tête (3) en partie extérieure à l'enveloppe (1) qu'elle ferme à l'une de ses extrémités, ledit obturateur et ladite tête étant reliés par un élément intermédiaire (4) dont la section est inférieure à celle qui est délimitée par la surface interne de l'enveloppe (1), de manière à définir avec cette dernière une chambre (12) de section annulaire.

4. Dispositif suivant la revendication 3, caractérisé en ce que la tubulure de sortie (15) est disposée sur le côté de l'enveloppe (1), ladite tubulure communiquant, d'une part avec la chambre (12) de section annulaire, d'autre part, avec une chambre cylindrique (13) définie, à l'autre extrémité de l'enveloppe (1), par l'obturateur (2) et ladite autre extrémité qui est fermée par un fond (14).

5. Dispositif suivant la revendication 4, caractérisé en ce que la tubulure de sortie (15) communique avec lesdites chambres (12, 13) par l'intermédiaire d'un collecteur (16) sur lequel elle est branchée, ledit collecteur étant rapporté sur l'enveloppe (1), et de deux canaux (17, 18) pratiqués à travers les parois dudit collecteur et de ladite enveloppe.

6. Dispositif suivant la revendication 3, caractérisé en ce que la tubulure de sortie (15) est disposée coaxialement à l'enveloppe (1), dans le prolongement et à l'autre extrémité de celle-ci, ladite tubulure communiquant avec la chambre (12) de section annulaire par un canal (20) pratiqué axialement à travers l'obturateur (2) et par des orifices (21) pratiqués radialement à travers la paroi de l'élément intermédiaire (4) de forme creuse.

7. Dispositif suivant l'une des revendications 1 à 6, caractérisé en ce que l'enveloppe (1) est réalisée sous la forme d'un parallélépipède rectangle.

8. Dispositif suivant l'une des revendications 1 à 7, caractérisé en ce que les rainures longitudinales (8) de l'obturateur (2) s'étendent sur une distance angulaire au plus égale à 90°.

9. Dispositif suivant la revendication 8, caractérisé en ce que les filetages (22) de la surface interne de l'enveloppe (1) sont tronqués de façon progressivement variable suivant une section transversale, par un alésage de l'enveloppe (1)

effectué suivant un axe décalé par rapport à l'axe géométrique de ladite enveloppe, de telle sorte que la section
des passages pour les produits à homogénéiser puisse être
réglée en marche par rotation de la tête de l'obturateur
(2).

1/2

0028948

-FIG 1-

-FIG 2-

36°

8

1

O₂

C

O₁

22

A

B

2

23

- FIG 3 -

B

1

22

23

- FIG 4 -

8

2

8

2

23

22

- FIG 5 -

1

Office européen
des brevets

**RAPPORT DE RECHERCHE EUROPEENNE**

Numéro de la demande

EP 80 40 1434

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| | FR - A - 885 826 (BORDERES) | 1-4,6 | B 01 F 5/06 |
| | * en entier; figure 3 * | | A 01 J 11/16 |
| | -- | | |
| | DE - C - 166 755 (SCHOU) | 1-6 | |
| | * figure 7 * | | |
| | -- | | |
| | FR - A - 788 038 (ETS. AUGUSTE ET DES MOUTIS) | 1 | |
| | * figures * | | DOMAINES TECHNIQUES RECHERCHES (Int. Cl. ³) |
| | -- | | |
| A | GB - A - 163 618 (MASSIP) | | B 01 F<br>B 29 B<br>A 01 J<br>F 16 K |
| | * figures * | | |
| | & FR - A - 536 655 | | |
| | -- | | |
| A | FR - A - 671 675 (CONTAL) | | |
| | * figures * | | |
| | ------ | | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 13-02-1981 | SALA |

OEB Form 1503.1   06.78